# EUROPEAN PATENT APPLICATION

(11) **EP 3 805 663 A1**
(43) Date of publication of application: **14.04.2021**
(21) Application number: 19811988.5
(22) Date of filing: 20.02.2019
(51) Int. Cl.: F25B 1/00, F25B 1/10

(54) **SUPERCRITICAL STEAM COMPRESSION-TYPE REFRIGERATION CYCLE AND LIQUID HEATING DEVICE**

(30) Priority: 31.05.2018 JP 2018105227
(71) Applicant: Panasonic Intellectual Property Management Co., Ltd., Osaka-shi, Osaka 540-6207 (JP)
(72) Inventor: YAMAOKA, Yuki, Osaka-shi, Osaka 540-6207 (JP); IMAGAWA, Tsuneko, Osaka-shi, Osaka 540-6207 (JP); KOISHIHARA, Kazuki, Osaka-shi, Osaka 540-6207 (JP); MACHIDA, Kazuhiko, Osaka-shi, Osaka 540-6207 (JP); MORIWAKI, Shunji, Osaka-shi, Osaka 540-6207 (JP); HSU, Chihsuan, Osaka-shi, Osaka 540-6207 (JP); AOYAMA, Shigeo, Osaka-shi, Osaka 540-6207 (JP); NAKATANI, Kazuhito, Osaka-shi, Osaka 540-6207 (JP)
(74) Representative: Eisenführ Speiser
(86) International application number: PCT/JP2019/006192
(87) International publication number: WO 2019/230070

(57) **Abstract**

The present invention provides a supercritical vapor compression type refrigeration cycle and a liquid heating device using the supercritical vapor compression type refrigeration cycle which includes: a main refrigerant circuit 10 formed by sequentially connecting, through a pipe 16, a compression mechanism 11, a usage-side heat exchanger 12, an intermediate heat exchanger 13, a first expansion device 14 and a heat source-side heat exchanger 15; a bypass refrigerant circuit 20 branched off from the pipe 16 between the usage-side heat exchanger 12 and the first expansion device 14, in which branched refrigerant is decompressed by a second expansion device 21 and thereafter, heat of the refrigerant is exchanged with that of refrigerant flowing through the main refrigerant circuit 10 by the intermediate heat exchanger 13, and the refrigerant joins up with refrigerant which is in the middle of a compression operation of the compression rotation element; and a control device 60, wherein the control device 60 controls a valve opening of the second expansion device 21 such that pressure of the refrigerant after it is decompressed by the second expansion device 21 keeps exceeding critical pressure, and also when high pressure is increased, COP of the supercritical vapor compression type refrigeration cycle is not deteriorated.

## Description

### [TECHNICAL FIELD]

The present invention relates to a supercritical vapor compression type refrigeration cycle and a liquid heating device using the same.

### [BACKGROUND TECHNIQUE]

Patent document 1 discloses a supercritical vapor compression type refrigeration cycle having a two-stage compressor which compresses refrigerant in two stages, and two expansion devices which expand refrigerant in two stages. Carbon dioxide is used as the refrigerant.

The supercritical vapor compression type refrigeration cycle of patent document 1 includes a gas-liquid separator. Refrigerant having gas phase in the gas-liquid separator as main component is intermediately injected into a refrigerant mixer which exists on the way to an intermediate connection circuit of the two-stage compressor from an injection circuit. The refrigerant is mixed with another refrigerant discharged from a low stage-side rotation compression rotation element, and is sucked into a high stage-side rotation compression rotation element.

In patent document 1, a ratio (displacement volume ratio) of a displacement volume of the high stage-side rotation compression rotation element to a displacement volume of the low stage-side rotation compression rotation element is made equal to or higher than isoentropy index root of a quotient obtained by dividing suction pressure of the two-stage compressor by refrigerant saturated hydraulic pressure in a first expansion device. According to this, discharge pressure of the low stage-side rotation compression rotation element is made equal to or lower than critical pressure of the refrigerant.

### [PRIOR ART DOCUMENT]

### [PATENT DOCUMENT]

### [Patent Document 1]

Japanese Patent Application Laid-open No.2010-071643

### [SUMMARY OF THE INVENTION]

### [PROBLEM TO BE SOLVED BY THE INVENTION]

However, in the supercritical vapor compression type refrigeration cycle of patent document 1, when high pressure is increased to produce high temperature water, since intermediate pressure of the refrigerant in the injection circuit is equal to or lower than the critical pressure of the refrigerant, a pressure difference between the high pressure and the intermediate pressure becomes large, and there is a problem that COP of the supercritical vapor compression type refrigeration cycle is deteriorated.

Hence, it is an object of the present invention to provide a supercritical vapor compression type refrigeration cycle which does not deteriorate COP thereof even when high pressure is increased, and to provide a liquid heating device using this supercritical vapor compression type refrigeration cycle.

### [MEANS FOR SOLVING THE PROBLEM]

Claim 1 provides a supercritical vapor compression type refrigeration cycle including: a main refrigerant circuit 10 formed by sequentially connecting, through a pipe 16, a compression mechanism 11 composed of compression rotation elements 11a, 11b, a usage-side heat exchanger 12 for heating usage-side heat medium by refrigerant discharged from the compression rotation element 11b, an intermediate heat exchanger 13, a first expansion device 14 and a heat source-side heat exchanger 15; a bypass refrigerant circuit 20 branched off from the pipe 16 between the usage-side heat exchanger 12 and the first expansion device 14, in which branched refrigerant is decompressed by a second expansion device 21 and thereafter, heat of the refrigerant is exchanged with that of the refrigerant flowing through the main refrigerant circuit 10 by the intermediate heat exchanger 13, and the refrigerant joins up with the refrigerant which is in middle of a compression operation of the compression rotation elements 11a, 11b; and a control device 60, wherein the control device 60 controls a valve opening of the second expansion device 21 such that pressure of the refrigerant after it is decompressed by the second expansion device 21 exceeds critical pressure.

According to claim 2, the supercritical vapor compression type refrigeration cycle described in claim 1, further includes an intermediate pressure-side pressure detector 52 which directly or indirectly detects pressure downstream of the second expansion device 21 of the bypass refrigerant circuit 20, wherein when detected pressure detected by the intermediate pressure-side pressure detector 52 is equal to or lower than the critical pressure, the control device 60 operates to increase the valve opening of the second expansion device 21.

According to claim 3, in the supercritical vapor compression type refrigeration cycle described in claim 2, the control device 60 increases operation frequency of the compression rotation element.

According to claim 4, the supercritical vapor compression type refrigeration cycle described in claim 3 further includes a high pressure-side pressure detector 51 which detects high pressure-side pressure of the main refrigerant circuit 10, wherein when detected pressure detected by the high pressure-side pressure detector 51 exceeds a predetermined value, the control device 60 lowers the operation frequency of the compression rotation element.

According to claim 5, in the supercritical vapor compression type refrigeration cycle described in any one of claims 1 to 4, the refrigerant is carbon dioxide.

Claim 6 provides a liquid heating device using the supercritical vapor compression type refrigeration cycle according to any one of claims 1 to 5, wherein the liquid heating device includes a usage-side heat medium circuit 30 which circulates the usage-side heat medium by a conveying device 31.

According to claim 7, the liquid heating device described in claim 6, further includes a heat medium outlet temperature thermistor 53 for detecting temperature of the usage-side heat medium which flows out from the usage-side heat exchanger 12, and a heat medium inlet temperature thermistor 54 for detecting temperature of the usage-side heat medium which flows into the usage-side heat exchanger 12, wherein the control device 60 operates the conveying device 31 such that detected temperature detected by the heat medium outlet temperature thermistor 53 becomes equal to target temperature, and when detected temperature detected by the heat medium inlet temperature thermistor 54 exceeds first predetermined temperature, operation frequencies of the compression rotation elements 11a, 11b are lowered.

According to claim 8, the liquid heating device described in claim 6, further includes a heat medium outlet temperature thermistor 53 for detecting temperature of the usage-side heat medium which flows out from the usage-side heat exchanger 12, and a heat medium inlet temperature thermistor 54 for detecting temperature of the usage-side heat medium which flows into the usage-side heat exchanger 12, wherein the control device 60 operates the conveying device 31 such that a temperature difference between detected temperature detected by the heat medium outlet temperature thermistor 53 and detected temperature detected by the heat medium inlet temperature thermistor 54 becomes equal to a target temperature difference, and when the detected temperature detected by the heat medium outlet temperature thermistor 53 exceeds second predetermined temperature, operation frequencies of the compression rotation elements 11a, 11b are lowered.

According to claim 9, in the liquid heating device described in any one of claims 6 to 8, the usage-side heat medium is water or antifreeze liquid.

### [EFFECT OF THE INVENTION]

According to the present invention, when high pressure is increased more than predetermined pressure, the compression rotation element is in the middle of a compressing operation, pressure at a position where refrigerant from the bypass refrigerant circuit joins up is kept in a state where the pressure exceeds critical pressure, and a pressure difference between suction pressure and discharge pressure at the high stage-side compression rotation element is reduced. According to this, COP of the supercritical vapor compression type refrigeration cycle can be enhanced.

### [BRIEF DESCRIPTION OF THE DRAWINGS]

Fig. 1 is a block diagram of a liquid heating device according to an embodiment of the present invention; and
Figs. 2 are pressure-enthalpy diagrams (P-h diagrams) under an ideal condition concerning the liquid heating device.

### [MODE FOR CARRYING OUT THE INVENTION]

In the supercritical vapor compression type refrigeration cycle of claim 1, the control device controls a valve opening of the second expansion device such that pressure of the refrigerant after it is decompressed by the second expansion device keeps exceeding critical pressure. According to claim 1, when high pressure is increased more than predetermined pressure, the compression rotation element is in middle of a compressing operation, pressure at a position where refrigerant from the bypass refrigerant circuit joins up is kept in a state where it exceeds critical pressure. According to this, a pressure difference between discharge pressure and pressure at the position where refrigerant from the bypass refrigerant circuit in the compression rotation element joins up can be reduced. Therefore, COP of the supercritical vapor compression type refrigeration cycle is not deteriorated.

According to claim 2, the supercritical vapor compression type refrigeration cycle of claim 1 further includes an intermediate pressure-side pressure detector which directly or indirectly detects pressure downstream of the second expansion device of the bypass refrigerant circuit, wherein when detected pressure detected by the intermediate pressure-side pressure detector is equal to or lower than the critical pressure, the control device operates to increase the valve opening of the second expansion device. According to claim 2, pressure reduction in the second expansion device is reduced. According to this, pressure at the position where the refrigerant from the bypass refrigerant circuit in the compression rotation element joins up can be kept in the state where it exceeds the critical pressure.

According to claim 3, in the supercritical vapor compression type refrigeration cycle of claim 2, the control device increases operation frequency of the compression rotation element. According to claim 3, by increasing the number of rotations of the compression rotation element, pressure at the position where the refrigerant from the bypass refrigerant circuit in the compression rotation element joins up can be kept in the state where it exceeds the critical pressure and at the same time, it is possible to enhance the heating ability in the usage-side heat exchanger.

According to claim 4, in the supercritical vapor compression type refrigeration cycle of claim 3 further includes a high pressure-side pressure detector which detects high pressure-side pressure of the main refrigerant circuit, wherein when detected pressure detected by the high pressure-side pressure detector exceeds a predetermined value, the control device lowers the operation frequency of the compression rotation element. According to claim 4, pressure at the position where the refrigerant from the bypass refrigerant circuit in the high stage-side compression rotation element joins up can be kept in the state where it exceeds the critical pressure and at the same time, pressure rise of the high pressure refrigerant can be suppressed.

According to claim 5, in the supercritical vapor compression type refrigeration cycle described in any one of claims 1 to 4, the refrigerant is carbon dioxide. According to claim 5, in the usage-side heat exchanger, temperature of the usage-side heat exchanger when the usage-side heat medium is heated by refrigerant can be increased.

A liquid heating device of claim 6 uses the supercritical vapor compression type refrigeration cycle of any one of claims 1 to 5, and the liquid heating device includes a usage-side heat medium circuit which circulates usage-side heat medium by a conveying device. According to claim 6, it is possible to utilize high temperature usage-side heat medium without deteriorating COP of the supercritical vapor compression type refrigeration cycle.

According to claim 7, the liquid heating device of claim 6 further includes a heat medium outlet temperature thermistor for detecting temperature of the usage-side heat medium which flows out from the usage-side heat exchanger, and a heat medium inlet temperature thermistor for detecting temperature of the usage-side heat medium which flows into the usage-side heat exchanger, wherein the control device operates the conveying device such that detected temperature detected by the heat medium outlet temperature thermistor becomes equal to target temperature, and when detected temperature detected by the heat medium inlet temperature thermistor exceeds first predetermined temperature, operation frequencies of the compression rotation elements are lowered. According to claim 7, it is possible to store high temperature water in a hot water tank for example while suppressing pressure rise of the high pressure refrigerant in the supercritical vapor compression type refrigeration cycle.

According to claim 8, the liquid heating device of claim 6 further includes a heat medium outlet temperature thermistor for detecting temperature of the usage-side heat medium which flows out from the usage-side heat exchanger, and a heat medium inlet temperature thermistor for detecting temperature of the usage-side heat medium which flows into the usage-side heat exchanger, wherein the control device operates the conveying device such that a temperature difference between detected temperature detected by the heat medium outlet temperature thermistor and detected temperature detected by the heat medium inlet temperature thermistor becomes equal to a target temperature difference, and when the detected temperature detected by the heat medium outlet temperature thermistor exceeds second predetermined temperature, operation frequencies of the compression rotation elements are lowered. According to claim 8, the liquid heating device can be utilized as a heater using high temperature water while suppressing pressure rise of high pressure refrigerant in the supercritical vapor compression type refrigeration cycle.

According to claim 9, in the liquid heating device of any one of claims 6 to 8, the usage-side heat medium is water or antifreeze liquid. According to claim 9, the liquid heating device is used for a heater, or high temperature water can be stored in a hot water storage tank.

### [Embodiment]

An embodiment of the present invention will be described below with reference to the drawings.

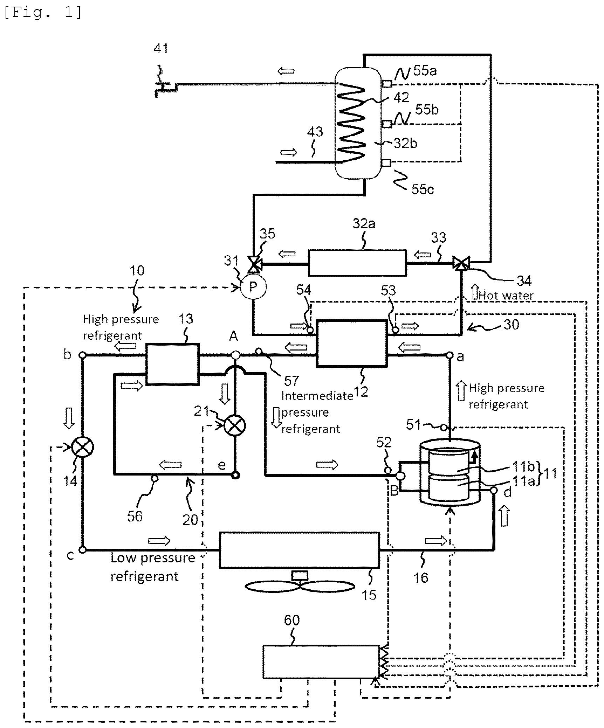

Fig. 1 is a block diagram of a liquid heating device according to the embodiment.

The liquid heating device is composed of a main refrigerant circuit 10, a bypass refrigerant circuit 20 and a usage-side heat medium circuit 30.

A supercritical vapor compression type refrigeration cycle is composed of the main refrigerant circuit 10 and the bypass refrigerant circuit 20.

The main refrigerant circuit 10 is formed by sequentially connecting, through a pipe 16, a compression mechanism 11, a usage-side heat exchanger 12 which is a radiator, an intermediate heat exchanger 13, a first expansion device 14 and a heat source-side heat exchanger 15 which is an evaporator. Carbon dioxide (CO2) is used as refrigerant. The compression mechanism 11 is composed of a low stage-side compression rotation element 11a and a high stage-side compression rotation element 11b. The usage-side heat exchanger 12 heats usage-side heat medium by refrigerant discharged from the high stage-side compression rotation element 11b. A volume ratio of the low stage-side compression rotation element 11a and the high stage-side compression rotation element 11b which configure the compression mechanism 11 is constant, these rotation elements use a common driving shaft (not shown), and the rotation elements are composed of a single compressor placed in one container. This embodiment is described using a two-stage compression mechanism in which the compression rotation element is composed of the low stage-side compression rotation element 11a and the high stage-side compression rotation element 11b, but the present invention can be applied also to a single compression mechanism. When a single compression mechanism is employed, refrigerant from the bypass refrigerant circuit 20 is in the middle of being compressed by the compression rotation element, a portion of the compression rotation element up to a position where refrigerant from the bypass refrigerant circuit 20 joins up is defined as the low stage-side compression rotation element 11a, and a portion of the compression rotation element after the position where the refrigerant from the bypass refrigerant circuit 20 joins up is defined as the high stage-side compression rotation element 11b.

The bypass refrigerant circuit 20 branches off from the pipe 16 between the usage-side heat exchanger 12 and the first expansion device 14, and is connected to the pipe 16 between the low stage-side compression rotation element 11a and the high stage-side compression rotation element 11b.

The bypass refrigerant circuit 20 is provided with a second expansion device 21. A portion of high pressure refrigerant after it passes through the usage-side heat exchanger 12, or a portion of high pressure refrigerant after it passes through the intermediate heat exchanger 13 is decompressed by the second expansion device 21, and becomes intermediate pressure refrigerant and after that, this refrigerant is heat-exchanged with high pressure refrigerant which flows through the main refrigerant circuit 10 by the intermediate heat exchanger 13, and the refrigerant joins up with refrigerant between the low stage-side compression rotation element 11a and the high stage-side compression rotation element 11b.

The usage-side heat medium circuit 30 is formed by sequentially connecting the usage-side heat exchanger 12, a conveying device 31 which is a conveying pump, and the heating terminal 32a through a heat medium pipe 33. Water of antifreeze liquid is used as the usage-side heat medium.

The usage-side heat medium circuit 30 in this embodiment includes a hot water storage tank 32b in parallel to the heating terminal 32a. The usage-side heat medium circuit 30 circulates the usage-side heat medium through the heating terminal 32a or a hot water storage tank 32b by switching between a switching valve 34 and a switching valve 35. The usage-side heat medium circuit 30 may include any one of the heating terminal 32a and the hot water storage tank 32b.

High temperature water produced by the usage-side heat exchanger 12 radiates heat in the heating terminal 32a and is utilized for heating a room, and low temperature water whose heat is radiated in the heating terminal 32a is again heated by the usage-side heat exchanger 12.

High temperature water produced by the usage-side heat exchanger 12 is introduced into the hot water storage tank 32b from an upper portion of the hot water storage tank 32b, low temperature water is sent out from a lower portion of the hot water storage tank 32b and heated by the usage-side heat exchanger 12.

A hot water supplying heat exchanger 42 is placed in the hot water storage tank 32b, and the hot water supplying heat exchanger 42 exchanges heat between supplied water from a water supplying pipe 43 and high temperature water in the hot water storage tank 32b. That is, if a hot water supplying plug 41 is opened, water is supplied from the water supplying pipe 43 into the hot water supplying heat exchanger 42, the water is heated by the hot water supplying heat exchanger 42, temperature of the water is adjusted to predetermined temperature by the hot water supplying plug 41, and hot water is supplied from the hot water supplying plug 41. Water is supplied from the water supplying pipe 43 and heated by the hot water supplying heat exchanger 42, and hot water supplied from the hot water supplying plug 41 and high temperature water in the hot water storage tank 32b are not mixed with each other, and they are indirectly heated.

The hot water supplying heat exchanger 42 is a water heat exchanger using a copper pipe or stainless steel pipe as a heat transfer pipe, and the water supplying pipe 43 extending from a water supplying source (running water) and the hot water supplying plug 41 are connected to the hot water supplying heat exchanger 42 as shown in Fig. 1. The water supplying pipe 43 sends normal temperature water into a lower end of the hot water supplying heat exchanger 42, i.e., into a lower portion in the hot water storage tank 32b. The normal temperature water sent into the hot water supplying heat exchanger 42 from the water supplying pipe 43 draws heat from the high temperature water in the hot water storage tank 32b while moving upward in the hot water storage tank 32b from downward, and the normal temperature water becomes high temperature heated water and is supplied from the hot water supplying plug 41.

To measure temperature of how water at a plurality of different height positions, the hot water storage tank 32b is provided with a plurality of hot water storage tank temperature thermistors, e.g., a first hot water storage tank temperature thermistor 55a, a second hot water storage tank temperature thermistor 55b and a third hot water storage tank temperature thermistor 55c. The normal temperature water which enters the hot water supplying heat exchanger 42 from the water supplying pipe 43 draws heat from high temperature water in the hot water storage tank 32b while moving upward in the hot water storage tank 32b from downward. Therefore, temperature of hot water in the hot water storage tank 32b naturally becomes high at an upper portion and lower at a low portion in the hot water storage tank 32b.

The main refrigerant circuit 10 is provided with a high pressure-side pressure detector 51 in the pipe 16 on the discharge side of the high stage-side compression rotation element 11b. The high pressure-side pressure detector 51 is provided in the main refrigerant circuit 10 from a discharge side of the high stage-side compression rotation element 11b to an upstream side of the first expansion device 14. It is only necessary that the high pressure-side pressure detector 51 can detect pressure of high pressure refrigerant in the main refrigerant circuit 10.

An intermediate heat exchanger main refrigerant inlet thermistor 57 is provided in the pipe 16 located downstream of the usage-side heat exchanger 12 of the main refrigerant circuit 10 and upstream of the intermediate heat exchanger 13. The intermediate heat exchanger main refrigerant inlet thermistor 57 detects temperature of refrigerant which flows out from the usage-side heat exchanger 12. The bypass refrigerant circuit 20 is provided with an intermediate heat exchanger bypass inlet thermistor 56 downstream of the second expansion device 21 and upstream of the intermediate heat exchanger 13. The intermediate heat exchanger bypass inlet thermistor 56 detects temperature of refrigerant which flows out from the second expansion device 21.

The usage-side heat medium circuit 30 includes a heat medium outlet temperature thermistor 53 for detecting temperature of usage-side heat medium which flows out from the usage-side heat exchanger 12, and a heat medium inlet temperature thermistor 54 for detecting temperature of usage-side heat medium which flows into the usage-side heat exchanger 12.

The liquid heating device further includes an intermediate pressure-side pressure detector 52 which directly or indirectly detects pressure on the downstream side of the second expansion device 21 of the bypass refrigerant circuit 20.

The intermediate pressure-side pressure detector 52 which directly or indirectly detects pressure on the downstream side of the second expansion device 21 is a pressure detector which directly, i.e., mechanically detects pressure of refrigerant.

The intermediate pressure-side pressure detector 52 which indirectly detects pressure on the downstream side of the second expansion device 21 will be described below.

More specifically, the intermediate pressure-side pressure detector 52 which indirectly detects pressure is an arithmetic processing unit in which a control device 60 calculates a value of pressure (intermediate pressure) of refrigerant after it is decompressed by the second expansion device 21 based on detected pressure detected by the high pressure-side pressure detector 51, detected temperature detected by the intermediate heat exchanger main refrigerant inlet thermistor 57, and detected temperature detected by the intermediate heat exchanger bypass inlet thermistor 56, or based on detected pressure detected by the high pressure-side pressure detector 51, detected temperature detected by the heat medium inlet temperature thermistor 54, and detected temperature detected by the intermediate heat exchanger bypass inlet thermistor 56.

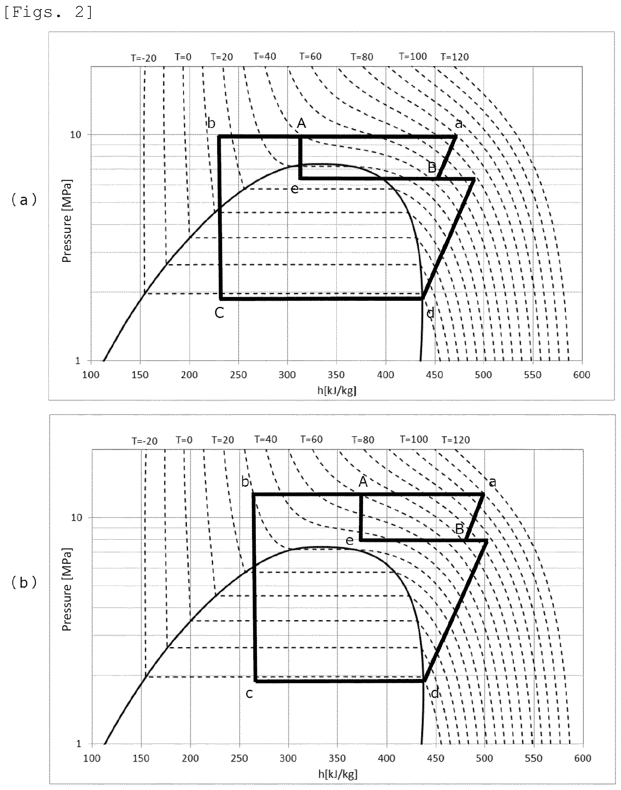

That is, a pressure-enthalpy diagram (P-h diagram) as shown in Figs. 2 is stored in the control device 60.

Every predetermined time, the high pressure-side pressure detector 51 detects high pressure-side pressure (discharge pressure of high stage-side compression rotation element 11b), the intermediate heat exchanger main refrigerant inlet thermistor 57 detects outlet temperature (point A) of refrigerant of the usage-side heat exchanger 12, and the intermediate heat exchanger bypass inlet thermistor 56 detects inlet temperature (point e) of refrigerant of the bypass refrigerant circuit 20 of the intermediate heat exchanger 13.

The control device 60 calculates pressure and enthalpy of the point e under an ideal condition that the point A and the point e have substantially the same enthalpies. According to this, it is possible to calculate a value of pressure (intermediate pressure) of refrigerant after it is decompressed by the second expansion device 21, and it is possible to determine whether the pressure is equal to or higher than critical pressure using this value.

It is also possible to use detected temperature detected by the heat medium inlet temperature thermistor 54 instead of detected temperature detected by the intermediate heat exchanger main refrigerant inlet thermistor 57 because the values are substantially the same.

That is, it is possible to determine that pressure (intermediate pressure) of refrigerant after it is decompressed by the second expansion device 21 is equal to or higher than the critical pressure from discharge pressure of the high stage-side compression rotation element 11b, from outlet temperature (point A) of refrigerant of the usage-side heat exchanger 12, from inlet temperature (point e) of refrigerant of the bypass refrigerant circuit 20 of the intermediate heat exchanger 13, or from temperature of usage-side heat medium which flows into the usage-side heat exchanger 12.

It is only necessary that the intermediate pressure-side pressure detector 52 includes any one of the pressure detectors which directly or indirectly detect.

The control device 60 controls operation frequencies of the low stage-side compression rotation element 11a and the high stage-side compression rotation element 11b, valve openings of the first expansion device 14 and the second expansion device 21, and the conveying device 31 by detected pressure detected by the high pressure-side pressure detector 51 and the intermediate pressure-side pressure detector 52, and by detected temperature detected by the heat medium outlet temperature thermistor 53 and the heat medium inlet temperature thermistor 54.

Figs. 2 are pressure-enthalpy diagrams (P-h diagrams) under the ideal condition concerning the liquid heating device in the embodiment, wherein Fig. 2(a) shows a case in which high pressure is lower than predetermined pressure and Fig. 2(b) is a case in which high pressure is equal to or higher than the predetermined pressure.

Points a to e and points A and B in Figs. 2 correspond to points in the liquid heating device shown in Fig. 1.

First, high pressure refrigerant (point a) discharged from the high stage-side compression rotation element 11b radiates heat in the usage-side heat exchanger 12 and after that, the high pressure refrigerant branches off from the main refrigerant circuit 10 at a refrigerant branch point A, the high pressure refrigerant is decompressed to intermediate pressure by the second expansion device 21 and becomes intermediate pressure refrigerant (point e), and the intermediate pressure refrigerant is heat-exchanged by the intermediate heat exchanger 13.

The high pressure refrigerant which flows through the main refrigerant circuit 10 after it radiates heat by the usage-side heat exchanger 12 is cooled by intermediate pressure refrigerant (point e) which flows through the bypass refrigerant circuit 20, and the high pressure refrigerant is decompressed by the first expansion device 14 in a state (point b) where enthalpy thereof is reduced.

According to this, refrigerant enthalpy of refrigerant (point c) which flows into the heat source-side heat exchanger 15 after it is decompressed by the first expansion device 14 is also reduced. Dryness (weight ratio occupied by gas phase component to the entire refrigerant) of refrigerant when it flows into the heat source-side heat exchanger 15 is reduced and liquid component of refrigerant is increased. Therefore, this contributes to evaporation in the heat source-side heat exchanger 15, a refrigerant ratio is increased and an endothermic energy amount from outside air is increased, and it returns to the suction side (point d) of the low stage-side compression rotation element 11a.

On the other hand, refrigerant of an amount corresponding to gas phase component which does not contribute to evaporation in the heat source-side heat exchanger 15 is made to bypass by the bypass refrigerant circuit 20, and becomes low temperature intermediate pressure refrigerant (point e), the refrigerant is heated by high pressure refrigerant which flows through the main refrigerant circuit 10 in the intermediate heat exchanger 13, and the refrigerant reaches a refrigerant joining point B located between the low stage-side compression rotation element 11a and the high stage-side compression rotation element 11b in a state where refrigerant enthalpy is increased.

Therefore, on the suction side of the high stage-side compression rotation element 11b (point B), since refrigerant pressure is higher than that on the suction side of the low stage-side compression rotation element 11a (point d), refrigerant density is also high, and refrigerant which joins up with refrigerant discharged from the low stage-side compression rotation element 11a is sucked, further compressed by the high stage-side compression rotation element 11b and is discharged. Therefore, a flow rate of the refrigerant which flows into the usage-side heat exchanger 12 is largely increased, and ability of heating water which is usage-side heat medium is largely enhanced.

When discharge pressure of the high stage-side compression rotation element 11b is increased and exceeds a predetermined value, the control device 60 starts controlling the valve opening of the second expansion device 21 such that pressure of refrigerant after it is decompressed by the second expansion device 21 exceeds the critical pressure.

More specifically, when the control device 60 determines that detected pressure detected by the high pressure-side pressure detector 51 increases and exceeds a first predetermined high pressure value, if detected pressure detected by the intermediate pressure-side pressure detector 52 is equal to or lower than the critical pressure, the control device 60 starts operation to increase the valve opening of the second expansion device 21.

As shown in Fig. 2(b), the control device 60 operates to increase the valve opening of the second expansion device 21, increases the operation frequencies of the low stage-side compression rotation element 11a and the high stage-side compression rotation element 11b, increases a circulation of amount of refrigerant which flows between the usage-side heat exchanger 12 and the bypass refrigerant circuit 20 such that detected pressure detected by the high pressure-side pressure detector 51 becomes equal to a second predetermined high pressure value which is a target high pressure value. The second predetermined high pressure value is higher than the first predetermined high pressure value. At that time, the control device 60 reduces the valve opening of the first expansion device 14.

At the same time, the control device 60 keeps a state where suction pressure of the high stage-side compression rotation element 11b exceeds the critical pressure such that detected pressure detected by the intermediate pressure-side pressure detector 52 becomes equal to a predetermined intermediate pressure value which is a target intermediate pressure value.

It is possible to increase the flow rate of refrigerant flowing through the bypass refrigerant circuit 20 by reducing a decompression amount in the second expansion device 21. Therefore, it is possible to keep a state where the suction pressure of the high stage-side compression rotation element 11b exceeds the critical pressure which is the predetermined intermediate pressure value. According to this, it is possible to keep the state where suction pressure of the high stage-side compression rotation element 11b exceeds the critical pressure, and ability of heating refrigerant in the usage-side heat exchanger 12 can also be enhanced.

If a state where high pressure refrigerant in the main refrigerant circuit 10 is equal to the second predetermined high pressure value which is higher than the critical pressure is maintained and a state where suction pressure of the high stage-side compression rotation element 11b exceeds the critical pressure which is the predetermined intermediate pressure value is maintained, a pressure difference between suction pressure and discharge pressure in the high stage-side compression rotation element 11b can be made small. Therefore, COP of the supercritical vapor compression type refrigeration cycle is not deteriorated.

It is also possible to employ a configuration of a two-stage compression mechanism in which the low stage-side compression rotation element 11a and the high stage-side compression rotation element 11b are composed of two independent compressors. It is only necessary to increase operation frequency of at least the high stage-side compression rotation element 11b.

A case where the hot water storage tank 32b is used in the usage-side heat medium circuit 30 will be described.

Among the plurality of hot water storage tank temperature thermistors, if detected temperature detected by the first hot water storage tank temperature thermistor 55a which is placed at the highest position in the hot water storage tank 32b is lower than a predetermined value, the control device 60 determines that high temperature water is insufficient in the hot water storage tank 32b.

The control device 60 operates the low stage-side compression rotation element 11a and the high stage-side compression rotation element 11b and heats low temperature water by the usage-side heat exchanger 12. The control device 60 operates the conveying device 31 such that detected temperature detected by the heat medium outlet temperature thermistor 53 which is heating producing temperature becomes equal to the target temperature.

According to this, high temperature water is produced by heating low temperature water, by the usage-side heat exchanger 12, which is sent out from the lower portion of the hot water storage tank 32b, and is introduced into the hot water storage tank 32b from the upper portion of the hot water storage tank 32b. At that time, detected temperature detected by the heat medium inlet temperature thermistor 54 is equal to or lower than third predetermined temperature. Therefore, the liquid heating device operates in a state described in Fig. 2(a).

Since high temperature water is gradually stored in the hot water storage tank 32b from the upper portion, detected temperature detected by the heat medium inlet temperature thermistor 54 gradually increases, but if detected temperature detected by the heat medium inlet temperature thermistor 54 exceeds the third predetermined temperature, the liquid heating device is made to operate in a state described in Fig. 2(b).

That is, the control device 60 operates to increase the valve opening of the second expansion device 21, increases operation frequencies of the low stage-side compression rotation element 11a and the high stage-side compression rotation element 11b, increases the circulation amount of refrigerant which flows between the usage-side heat exchanger 12 and the bypass refrigerant circuit 20, and makes detected pressure detected by the high pressure-side pressure detector 51 equal to the second predetermined high pressure value which is the target high pressure value. At the same time, the control device 60 makes detected pressure detected by the intermediate pressure-side pressure detector 52 equal to a predetermined intermediate pressure value which is a target intermediate pressure value. At that time, the control device 60 operate to reduce the valve opening of the first expansion device 14.

According to this, inlet temperature of heat medium to the usage-side heat exchanger 12 becomes high, heating ability of refrigerant in the usage-side heat exchanger 12 is enhanced by a reduced amount of an enthalpy difference (a-A) of refrigerant in the usage-side heat exchanger 12, thereby maintaining the supply of high temperature water to the hot water storage tank 32b.

When detected temperature detected by the heat medium inlet temperature thermistor 54 exceeds a first predetermined temperature which is higher than the third predetermined temperature, the control device 60 executes at least any one of reduction of operation frequencies of the low stage-side compression rotation element 11a and the high stage-side compression rotation element 11b and increase in the valve opening of the first expansion device 14, and the control device 60 operates to reduce the valve opening of the second expansion device 21. According to this, it is possible to store high temperature water in the hot water storage tank 32b while suppressing pressure rise of high pressure refrigerant in the usage-side heat exchanger 12 such that pressure of high pressure refrigerant in the usage-side heat exchanger 12 does not exceed the second predetermined high pressure value which is the target high pressure value.

Instead of the third predetermined temperature and the first predetermined temperature which are detected temperature detected by the heat medium inlet temperature thermistor 54, it is possible to use the first predetermined high pressure value and the second predetermined high pressure value which are detected pressure detected by the high pressure-side pressure detector 51 as threshold values, and the same operation may be executed.

It is possible to employ a configuration that the low stage-side compression rotation element 11a and the high stage-side compression rotation element 11b are the two-stage compression mechanism composed of two independent compressors, and operation frequency of at least the high stage-side compression rotation element 11b may be lowered.

A case where the heating terminal 32a is used in the usage-side heat medium circuit 30 will be described.

The control device 60 operates the low stage-side compression rotation element 11a and the high stage-side compression rotation element 11b and heats circulated water by the usage-side heat exchanger 12, and the control device 60 operates the conveying device 31 such that a temperature difference, which is the temperature difference of the circulated water, between detected temperature detected by the heat medium outlet temperature thermistor 53 and detected temperature detected by the heat medium inlet temperature thermistor 54 becomes equal to a target temperature difference.

According to this, high temperature water produced by the usage-side heat exchanger 12 radiates heat in the heating terminal 32a and is utilized for heating a room, and low temperature water whose heat is released by the heating terminal 32a is again heated by the usage-side heat exchanger 12. At that time, Since control is performed such that a temperature difference between detected temperature detected by the heat medium outlet temperature thermistor 53 and detected temperature detected by the heat medium inlet temperature thermistor 54 becomes equal to the target temperature difference and since the detected temperature detected by the heat medium outlet temperature thermistor 53 is equal to or lower than fourth predetermined temperature, the liquid heating device is operated in the state described in Fig. 2(a).

Since the heating load is gradually reduced, a temperature difference between detected temperature detected by the heat medium outlet temperature thermistor 53 and detected temperature detected by the heat medium inlet temperature thermistor 54 becomes equal to the target temperature difference. Therefore, the detected temperature detected by the heat medium outlet temperature thermistor 53 and the detected temperature detected by the heat medium inlet temperature thermistor 54 increase gradually. However, if the detected temperature detected by the heat medium outlet temperature thermistor 53 exceeds a fourth predetermined temperature, the liquid heating device is made to operate in the state described in Fig. 2(b).

That is, the control device 60 operates to increase the valve opening of the second expansion device 21, rise operation frequencies of the low stage-side compression rotation element 11a and the high stage-side compression rotation element 11b, increases a circulation amount of refrigerant flowing between the usage-side heat exchanger 12 and the bypass refrigerant circuit 20, and makes detected pressure detected by the high pressure-side pressure detector 51 equal to a second predetermined high pressure value which is a target high pressure value. At the same time, the control device 60 makes detected temperature detected by the intermediate pressure-side pressure detector 52 equal to a predetermined intermediate pressure value which is a target intermediate pressure value. At that time, the control device 60 operates to reduce the valve opening of the first expansion device 14.

According to this, the heating load becomes small, and heating ability of refrigerant in the usage-side heat exchanger 12 is enhanced by a reduced amount of an enthalpy difference (a-A) of refrigerant in the usage-side heat exchanger 12, thereby maintaining the supply of high temperature water to the heating terminal 32a.

When detected temperature detected by the heat medium outlet temperature thermistor 53 exceeds second predetermined temperature which is higher than the fourth predetermined temperature, the control device 60 executes at least any one of reduction of operation frequencies of the low stage-side compression rotation element 11a and the high stage-side compression rotation element 11b and increase in the valve opening of the first expansion device 14, and the control device 60 operates to reduce the valve opening of the second expansion device 21. According to this, it is possible to utilize the liquid heating device as a heating device while suppressing pressure rise of high pressure refrigerant in the usage-side heat exchanger 12 such that pressure of high pressure refrigerant in the usage-side heat exchanger 12 does not exceed the second predetermined high pressure value which is the target high pressure value.

Instead of the fourth predetermined temperature and the second predetermined temperature which are the detected temperature detected by the heat medium outlet temperature thermistor 53, it is possible to use the first predetermined high pressure value and the second predetermined high pressure value which are detected pressure detected by the high pressure-side pressure detector 51 as threshold values, and the same operation may be executed.

It is possible to employ the configuration that the low stage-side compression rotation element 11a and the high stage-side compression rotation element 11b are the two-stage compression mechanism composed of two independent compressors, and the operation frequency of at least the high stage-side compression rotation element 11b may be lowered.

It is not necessary that the rotation elements are divided into the low stage-side compression rotation element 11a and the high stage-side compression rotation element 11b, and the rotation elements may be a single compression rotation element. When the rotation elements may be a single compression rotation element, refrigerant from the bypass refrigerant circuit 20 is in the middle of a compressing operation of the compression rotation element.

It is preferable that in the supercritical vapor compression type refrigeration cycle of the embodiment, refrigerant is carbon dioxide. This is because that the usage-side heat medium when it is heated in the usage-side heat exchanger 12 by carbon dioxide which is refrigerant can be heated to high temperature.

If the usage-side heat medium is water or antifreeze liquid, it can be used for the heating terminal 32a or high temperature water can be stored in the hot water storage tank 32b.

### [INDUSTRIAL APPLICABILITY]

According to the present invention, it is possible to enhance COP of a supercritical vapor compression type refrigeration cycle.

### [EXPLANATION OF SYMBOLS]

10 main refrigerant circuit
11 compression mechanism
11a low stage-side compression rotation element
11b high stage-side compression rotation element
12 usage-side heat exchanger
13 intermediate heat exchanger
14 first expansion device
15 heat source-side heat exchanger
16 pipe
20 bypass refrigerant circuit
21 second expansion device
30 usage-side heat medium circuit
31 conveying device
32a heating terminal
32b hot water storage tank
33 heat medium pipe
34, 35 switching valve
41 hot water supplying plug
42 hot water supplying heat exchanger
43 water supplying pipe
51 high pressure-side pressure detector
52 intermediate pressure-side pressure detector
53 heat medium outlet temperature thermistor
54 heat medium inlet temperature thermistor
55a first hot water storage tank temperature thermistor
55b second hot water storage tank temperature thermistor
55c third hot water storage tank temperature thermistor
56 intermediate heat exchanger bypass inlet thermistor
57 intermediate heat exchanger main refrigerant inlet
thermistor
60 control device

## Claims

1. A supercritical vapor compression type refrigeration cycle comprising:
a main refrigerant circuit formed by sequentially connecting, through a pipe, a compression mechanism composed of compression rotation elements, a usage-side heat exchanger for heating usage-side heat medium by refrigerant discharged from the compression rotation element, an intermediate heat exchanger, a first expansion device, and a heat source-side heat exchanger;
a bypass refrigerant circuit branched off from the pipe between the usage-side heat exchanger and the first expansion device, in which branched refrigerant is decompressed by a second expansion device and thereafter, heat of the refrigerant is exchanged with that of the refrigerant flowing through the main refrigerant circuit by the intermediate heat exchanger, and the refrigerant joins up with the refrigerant which is in middle of a compression operation of the compression rotation element; and
a control device, wherein
the control device controls a valve opening of the second expansion device such that pressure of the refrigerant after it is decompressed by the second expansion device exceeds critical pressure.

2. The supercritical vapor compression type refrigeration cycle according to claim 1, further comprising an intermediate pressure-side pressure detector which directly or indirectly detects pressure downstream of the second expansion device of the bypass refrigerant circuit, wherein when detected pressure detected by the intermediate pressure-side pressure detector is equal to or lower than the critical pressure, the control device operates to increase the valve opening of the second expansion device.

3. The supercritical vapor compression type refrigeration cycle according to claim 2, wherein the control device increases operation frequency of the compression rotation element.

4. The supercritical vapor compression type refrigeration cycle according to claim 3, further comprising a high pressure-side pressure detector which detects high pressure-side pressure of the main refrigerant circuit, wherein when detected pressure detected by the high pressure-side pressure detector exceeds a predetermined value, the control device lowers the operation frequency of the compression rotation element.

5. The supercritical vapor compression type refrigeration cycle according to any one of claims 1 to 4, wherein the refrigerant is carbon dioxide.

6. A liquid heating device using the supercritical vapor compression type refrigeration cycle according to any one of claims 1 to 5, wherein the liquid heating device includes a usage-side heat medium circuit which circulates the usage-side heat medium by a conveying device.

7. The liquid heating device according to claim 6, further comprising a heat medium outlet temperature thermistor for detecting temperature of the usage-side heat medium which flows out from the usage-side heat exchanger, and
a heat medium inlet temperature thermistor for detecting temperature of the usage-side heat medium which flows into the usage-side heat exchanger, wherein
the control device operates the conveying device such that detected temperature detected by the heat medium outlet temperature thermistor becomes equal to target temperature, and
when detected temperature detected by the heat medium inlet temperature thermistor exceeds first predetermined temperature, operation frequency of the compression rotation element is lowered.

8. The liquid heating device according to claim 6, further comprising a heat medium outlet temperature thermistor for detecting temperature of the usage-side heat medium which flows out from the usage-side heat exchanger, and
a heat medium inlet temperature thermistor for detecting temperature of the usage-side heat medium which flows into the usage-side heat exchanger, wherein
the control device operates the conveying device such that a temperature difference between detected temperature detected by the heat medium outlet temperature thermistor and detected temperature detected by the heat medium inlet temperature thermistor becomes equal to a target temperature difference, and
when the detected temperature detected by the heat medium outlet temperature thermistor exceeds second predetermined temperature, operation frequency of the compression rotation element is lowered.

9. The liquid heating device according to any one of claims 6 to 8, wherein the usage-side heat medium is water or antifreeze liquid.
